# FASCICULE DE BREVET EUROPEEN

(11) **EP 3 835 487 B1**
(45) Date de publication et mention de la délivrance du brevet: **27.09.2023**
(21) Numéro de dépôt: 20213603.2
(22) Date de dépôt: 11.12.2020
(51) Int. Cl.: E02D 1/02, G01N 3/42

(54) **PÉNÉTROMÈTRE STATIQUE AUTO-FOREUR**
SELBSTBOHRENDES STATISCHES PENETROMETER
SELF-DRILLING STATIC PENETROMETER

(30) Priorité: 13.12.2019 FR 1914357
(43) Date de publication de la demande: 16.06.2021
(73) Titulaire: Equatech.R&D, 74960 Annecy (FR)
(72) Inventeur: RIEGEL, Pierre, 74330 Poisy (FR)
(74) Mandataire: IP Trust

(56) Documents cités:
- EP-A1- 1 895 090
- WO-A2-98/57143
- FR-A- 1 603 725
- FR-A1- 2 584 186

## Description

### DOMAINE DE L'INVENTION

La présente invention concerne le domaine de la géotechnique et de la géologie. Elle concerne en particulier un dispositif de mesure de la résistance à la pénétration d'un sol, appelé communément un pénétromètre, présentant une excellente capacité de franchissement des sols durs.

### ARRIERE PLAN TECHNOLOGIQUE DE L'INVENTION

Il existe différents types de pénétromètres fonctionnant en mode statique ou dynamique, utilisés pour mesurer la résistance à la pénétration d'un sol, comme notamment décrits dans les documents WO2019016448, WO2019034823, EP2535460, FR2650011, FR2584186, FR1603725A.

Selon les techniques mises en oeuvre et les forces d'enfoncement applicables, ces pénétromètres peuvent présenter des capacités de franchissement des sols durs très différentes.

En particulier, même des pénétromètres massifs et adaptés à des sols très compacts et résistants rencontrent des limites de franchissement dans les couches à gros blocs, cimentées ou rocheuses.

Il existe des méthodes d'investigation très répandues et d'usage commun par forage destructif qui ne sont pratiquement pas limitées dans leur capacité de franchissement. Il s'agit de perforer dans un premier temps le sol à l'aide de mèches ou trépans, puis de remonter les tiges de forage, et leur substituer un outil de mesure de résistance des sols, par l'approche pressiométrique principalement. Ces méthodes présentent néanmoins l'inconvénient de procurer des mesures entachées d'erreurs et d'imprécision car un forage préalable à la mesure tend à modifier les caractéristiques physico-mécaniques des sols, dans la mesure où l'essai mécanique de résistance des sols est placé systématiquement au-dessus de la base du forage, là où le sol a été perturbé et modifié par le forage. De plus, ces méthodes requièrent beaucoup de manutention du fait de l'utilisation d'un outil de forage alternée avec l'installation du train de tiges du pressiomètre dans le forage ; ces méthodes sont de fait couteuses et fastidieuses.

Une autre méthode, dite SPT (« standard pénétration test »), consiste à battre en fond de forage un petit carottier, pour prélever et mesurer la résistance du sol. Cette méthode, mesurant la compacité cette fois sous la base du forage, est limitée de fait par la consistance des sols durs, qui peuvent bloquer rapidement la mesure. De plus, il s'agit ici d'un enfoncement par battage (enfoncement en mode dynamique et non en mode statique), les valeurs de résistance de sol étant déduites expérimentalement par corrélations entre un enfoncement et un nombre de coups correspondant. La précision reste donc très aléatoire, surtout en cas de refus de pénétration.

### OBJET DE L'INVENTION

Un objet de la présente invention est de proposer une solution remédiant à tout ou partie des inconvénients de l'état de la technique ; en particulier, l'invention concerne un pénétromètre permettant des mesures de résistance du sol précises en mode statique, le pénétromètre étant simple de mise en oeuvre et procurant une excellente capacité de franchissement des sols durs.

### BREVE DESCRIPTION DE L'INVENTION

L'invention concerne un pénétromètre pour la mesure en mode statique de la résistance à la pénétration d'un sol comprenant au moins une tige centrale terminée à une première extrémité par une pointe de mesure, et au moins un tube creux entourant la tige centrale, cette dernière étant apte à coulisser à l'intérieur du tube creux.

Le pénétromètre est remarquable en ce qu'il comprend un taillant solidaire d'une première extrémité du tube creux, et dont une face inférieure destinée à forer le sol est munie de premiers éléments d'attaque. Le taillant accueille la pointe de mesure dans un logement interne, la pointe de mesure étant mobile dans le logement interne en translation selon un axe d'enfoncement, entre une position rétractée et une pluralité de positions sorties. La pointe de mesure est munie de deuxièmes éléments d'attaque sur une face inférieure destinée à s'enfoncer dans le sol, de sorte que, dans la position rétractée de la pointe de mesure, les premiers et deuxièmes éléments d'attaque définissent une surface d'attaque continue.

Selon d'autres caractéristiques avantageuses prises seules ou selon toute combinaison techniquement réalisable :
- le taillant comprend des duses reliant le logement interne et l'extérieur du taillant, pour éjecter un fluide, ledit fluide étant acheminé jusqu'au logement interne via le tube creux ou la tige centrale ;
- la face inférieure de la pointe de mesure présente une forme conique et l'angle en pointe est compris entre 90° et 120° ;
- les premiers et/ou les deuxièmes éléments d'attaque se présentent sous forme de boutons, d'ogives, de pastilles ou de barrettes ;
- les premiers éléments d'attaque sont différents des deuxièmes éléments d'attaque ;
- le taillant comprend des troisièmes éléments d'attaque sur une face supérieure, opposée à la face inférieure ;
- le logement interne du taillant comprend un épaulement contre lequel la pointe de mesure est bloquée lorsqu'elle est en position rétractée ;
- le pénétromètre comprend une cellule de mesure comportant :
   o un vérin dont un corps externe est solidaire d'une deuxième extrémité du tube creux et dont un piston mobile est en contact avec une deuxième extrémité de la tige centrale, l'actionnement du piston mobile permettant de déplacer la pointe de mesure dans la pluralité de positions sorties,
   o un dispositif de mesure de contrainte pour mesurer la résistance du sol lors du déplacement de la pointe de mesure dans la pluralité de positions sorties ;
- la cellule de mesure est amovible ;
- le pénétromètre comprend un dispositif de rappel pour ramener la pointe de mesure dans une position rétractée en l'absence d'actionnement du piston mobile du vérin ;
- le pénétromètre comprend un outil rotatif, hors du sol, apte à provoquer la rotation du tube creux, l'outil rotatif étant fixé soit à la cellule de mesure, soit directement au tube creux ;
- le pénétromètre comprend un système d'injection du fluide connecté à une deuxième extrémité du tube creux, pour injecter le fluide dans le tube creux ;
- la tige centrale est pleine et présente une aile hélicoïdale sur sa surface externe, pour favoriser son centrage dans le tube creux et guider l'écoulement du fluide dans le tube creux, jusqu'au taillant ;
- le pénétromètre comprend un système d'injection d'un fluide connecté à une deuxième extrémité de la tige centrale, pour injecter le fluide dans ladite tige centrale, laquelle tige est creuse ;
- la pointe de mesure comprend une tête portant la face inférieure de ladite pointe et un corps reliant la tête et la tige centrale, ledit corps présentant au moins une portion conique ;
- le corps de la pointe de mesure est cannelé ou claveté pour interdire toute rotation de ladite pointe dans le logement interne du taillant.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1a]
[Fig. 1b]

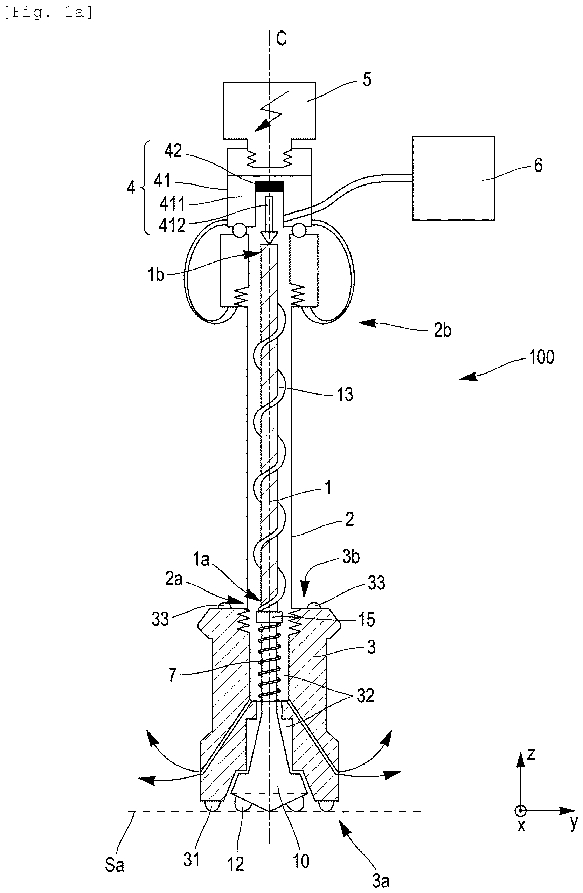

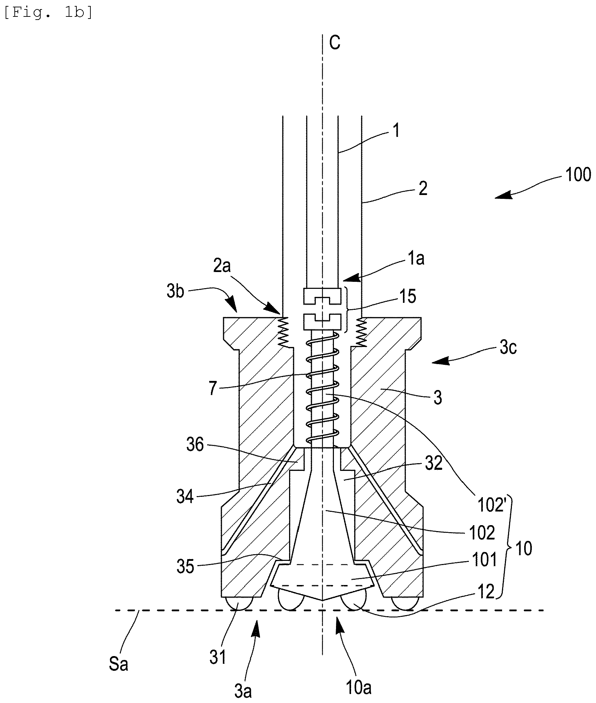

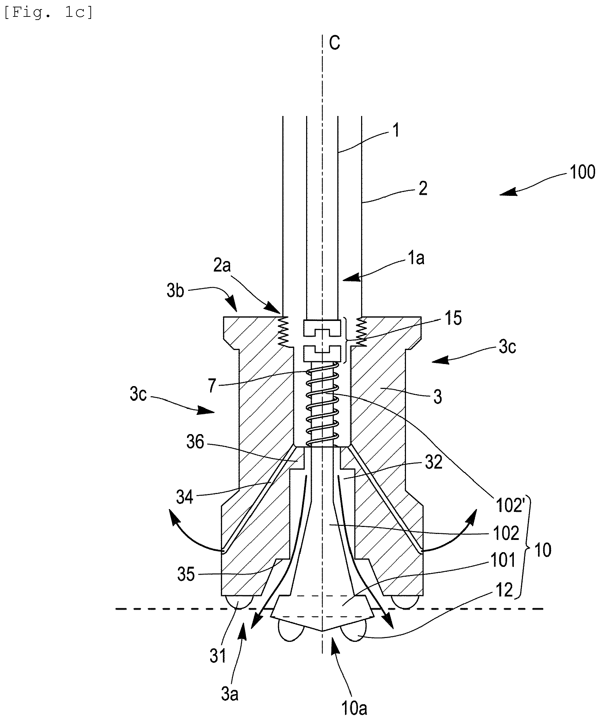

[Fig. 1c] Les figures 1a, 1b, 1c présentent des schémas de principe d'un pénétromètre conforme à l'invention ;
[Fig. 2a]

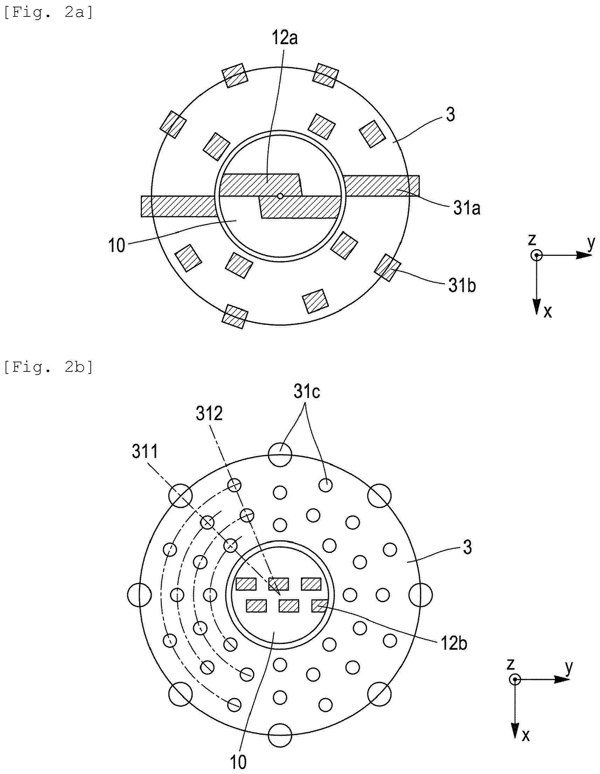

[Fig. 2b] Les figures 2a et 2b présentent des exemples de disposition des premiers et des deuxièmes éléments d'attaque, respectivement sur la face inférieure du taillant et sur la face inférieure de la pointe de mesure d'un pénétromètre conforme à l'invention ;
[Fig. 3a]

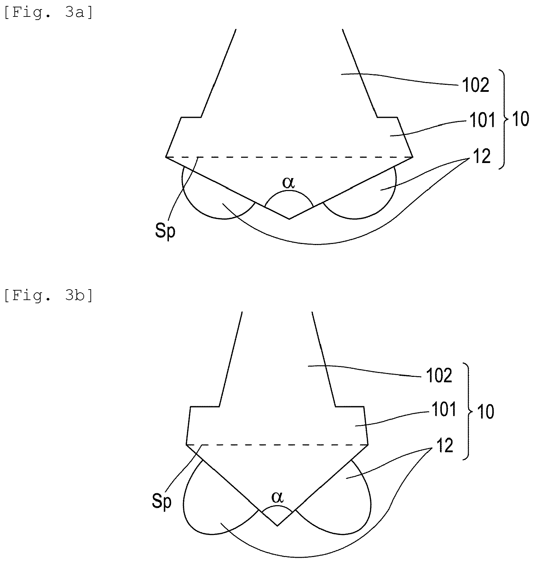

[Fig. 3b] Les figures 3a et 3b présentent deux vues en coupe d'une pointe de mesure pour un pénétromètre conforme à l'invention.

### DESCRIPTION DETAILLEE DE L'INVENTION

Dans la partie descriptive, les mêmes références sur les figures pourront être utilisées pour des éléments de même type. Les figures sont des représentations schématiques qui, dans un objectif de lisibilité, ne sont pas nécessairement à l'échelle.

La présente invention concerne un pénétromètre 100 destiné à être utilisé pour la mesure en mode statique de la résistance à la pénétration d'un sol.

Comme illustré sur la figure 1a, le pénétromètre 100 comprend au moins une tige centrale 1 dont une première extrémité 1a est solidaire d'une pointe de mesure 10. Cette première extrémité 1a et la pointe de mesure 10 sont destinées à pénétrer dans le sol. Le pénétromètre 100 comprend au moins un tube creux 2 entourant la tige centrale 1. Les diamètres respectifs du tube creux 2 et de la tige centrale 1 sont adaptés de sorte que cette dernière puisse coulisser librement à l'intérieur du tube creux 2.

Le couple formé par la tige centrale 1 et le tube creux 2 est destiné à s'enfoncer dans le sol, la pointe de mesure 10 en bout ayant pour fonction de mesurer la résistance à la pénétration du sol. Comme cela est bien connu en soi, pour tester la résistance du sol à des profondeurs diverses, des tiges 1 et tubes 2 additionnels peuvent être raccordés bout à bout, pour former un train de couples tige/tube, pouvant être enfoncé dans le sol sur des profondeurs de plusieurs dizaines de mètres. Dans la suite de cette description, nous parlerons d'un tube creux et d'une tige centrale, étant entendu qu'il pourra bien-sûr s'agir d'un train de plusieurs tubes creux et tiges centrales.

Le tube creux 2 et la tige centrale 1 sont préférentiellement formés à partir d'acier présentant une dureté comprise entre 70 à 90 kg/mm2. Le tube creux 2 peut présenter un diamètre compris entre 30mm et 50mm, par exemple un diamètre de 32mm ou 45mm avec passage intérieur de 12mm ou 16mm environ. La tige centrale 1 peut présenter un diamètre compris entre 10 et 30mm, lui permettant de coulisser librement dans le tube creux 2.

Le pénétromètre 100 comprend également un taillant 3 solidaire d'une première extrémité 2a du tube creux 2 (figure 1b). Une face inférieure 3a du taillant 3, destinée à forer le sol, est munie de premiers éléments d'attaque 31. Le diamètre de la face inférieure 3a pourra être compris entre 70mm et 100mm. Le taillant 3 comprend un logement interne 32 traversant, s'étendant de la face inférieure 3a à la face supérieure 3b du taillant 3. L'axe de symétrie du logement interne 32 est l'axe central C du taillant 3.

Le logement interne 32 accueille la pointe de mesure 10. Cette dernière est mobile dans ledit logement, en translation selon un axe d'enfoncement (colinéaire à l'axe central C). Le mouvement en translation de la pointe de mesure 10 peut s'effectuer entre une position rétractée et une pluralité de positions sorties : par exemple, la figure 1b et la figure 1c montrent la pointe de mesure 10 respectivement dans une position rétractée et dans une position sortie. De manière avantageuse, le logement interne 32 du taillant 3 comprend un épaulement 35 contre lequel la pointe de mesure 10 est bloquée lorsqu'elle est en position rétractée.

La pointe de mesure 10 est munie de deuxièmes éléments d'attaque 12 sur une face inférieure 10a destinée à s'enfoncer dans le sol. Les deuxièmes éléments d'attaque 12 sont disposés sur la face inférieure 10a et dimensionnés de sorte que, dans la position rétractée de la pointe de mesure 10, les premiers 31 et deuxièmes 12 éléments d'attaque définissent une surface d'attaque Sₐ continue. Par surface d'attaque continue on entend que les extrémités des éléments d'attaque 12,31 sont configurées pour atteindre et attaquer le sol en même temps, de manière homogène et régulière, et de manière complémentaire. Les premiers 31 et deuxièmes 12 éléments d'attaque, bien que sur deux supports distincts (le taillant 3 et la pointe de mesure 10) sont disposés les uns par rapport aux autres comme les éléments d'attaque d'un taillant conventionnel, de manière à maximiser la surface d'attaque Sₐ lorsque l'ensemble taillant 3 / pointe 10 sera mis en rotation, en mode forage.

Deux exemples de formes et de dispositions des éléments d'attaque 12,31 sont illustrés sur les figures 2a et 2b. Les premiers 31 et/ou les deuxièmes 12 éléments d'attaque peuvent se présenter sous forme de boutons, d'ogives, de pastilles ou de barrettes. Les premiers éléments d'attaque 31 et les deuxièmes éléments d'attaque 12 pourront être soit identiques, soit différents entre eux. Sur la figure 2a, des premiers éléments d'attaque 31a présentent une forme de lames, et d'autres 31b présentent une forme de pastilles. Sur la pointe 10, les deuxièmes éléments d'attaque 12a se présentent sous forme de lames se croisant en ciseaux pour attaquer efficacement le sol, de part et d'autre du centre de la pointe 10. Sur la figure 2b, les premiers éléments d'attaque 31c sur le taillant 3 ont une forme de boutons circulaires ou ogivaux et sont répartis selon deux séries alternées 311,312 définissant des cercles concentriques distincts (de manière à attaquer uniformément le sol en mode forage et à ne pas laisser de cercles concentriques de roche non taillée). La pointe 10 comprend des deuxièmes éléments 12b se croisant en ciseaux, sous forme de lames continues ou discontinues (tel que représenté sur la figure 2b). Avantageusement, les premiers 31 et deuxièmes 12 éléments d'attaque sont en acier traité et carbure, par exemple de tungstène.

De manière avantageuse, la face inférieure 10a de la pointe de mesure 10 présente une forme conique et l'angle α en pointe est compris entre 90° et 120°, comme illustré sur les figures 3a et 3b. La taille des deuxièmes éléments d'attaque 12 est par conséquent adaptée à cette forme conique, de manière à former une surface d'attaque continue, comme précédemment évoqué. La forme conique est favorable à la pénétration de la pointe de mesure 10 dans le sol. Rappelons que, pour obtenir la résistance du sol, la pression de réaction du sol lors de l'enfoncement de la pointe de mesure 10 est rapportée à la surface de la section plane Sₚ de ladite pointe 10. Après une calibration de mesures entre une pointe de mesure 10 classique, telle que par exemple celle décrite dans le document WO2019016448, et la pointe de mesure 10 selon la présente invention (comportant les deuxièmes éléments d'attaque 12), il sera donc possible de remonter à la résistance du sol, sans influence du profil particulier de la face inférieure 10a de la pointe 10. A titre d'exemple, la pointe de mesure 10 présente un diamètre de 30 mm, soit une surface de sa section plane d'environ 7 cm².

Ainsi, le pénétromètre 100 selon la présente invention peut réaliser des mesures précises en mode statique en actionnant la pointe de mesure 10 en sa pluralité de positions sorties et en mesurant la résistance associée à l'enfoncement de ladite pointe dans le sol. En cas de refus d'enfoncement de la pointe de mesure 10, classiquement lié à la rencontre d'un sol très dur, par exemple rocheux, la pointe de mesure 10 peut être mise en position rétractée et l'ensemble taillant 3 / pointe 10 mis en rotation de manière à traverser la couche dure de sol en mode forage. Les mesures statiques peuvent ensuite être reprises en stoppant la rotation du taillant 3 et en sortant la pointe 10. Grâce à sa structure, le pénétromètre 100 selon l'invention procure une excellente capacité de franchissement des sols très durs et une mise en oeuvre aisée, ne nécessitant pas d'utiliser en alternance un outil de forage et un pénétromètre ou pressiomètre, en présence de couches très résistantes.

Pour opérer en mode forage, le pénétromètre 100 requiert qu'un fluide soit injecté en tête de forage et participe à remonter les poussières et débris issus du sol foré. Pour cela, le pénétromètre 100 comprend avantageusement un système d'injection 6 d'un fluide. Le fluide pourra être de l'eau ou autres liquides compatibles avec un rejet dans l'environnement. Il est préférentiellement injecté à basse pression (par exemple, à quelques bars), pour limiter l'endommagement du sol.

Selon un premier mode de réalisation, le système d'injection 6 est connecté à une deuxième extrémité 2b, hors du sol, du tube creux 2, pour injecter le fluide dans ledit tube 2. La tige centrale 1 est préférentiellement pleine et présente une aile hélicoïdale 13 sur sa surface externe, pour favoriser son centrage dans le tube creux 2 et guider l'écoulement du fluide dans le tube creux 2, jusqu'au taillant 3 (figure 1a). L'aile hélicoïdale 13 n'empêche pas le coulissement de la tige centrale 1 dans le tube creux 2 mais limite grandement le décentrage qui pourrait exister entre les deux.

Selon un deuxième mode de réalisation, un système d'injection d'un fluide est connecté à une deuxième extrémité 1b de la tige centrale 1. Ladite tige 1 est creuse et le fluide peut être injecté à l'intérieur. Dans ce cas de figure, la tige centrale 1 est raccordée à la pointe de mesure 10 (et en particulier à une extension 102' du corps 102 de la pointe 10) par le biais d'une noix de tenue 15 permettant au fluide de s'écouler dans le logement interne 32.

Qu'il soit acheminé via la tige centrale 1 ou via le tube creux 2, le fluide atteint le logement interne 32 du taillant 3. Le taillant 3 comprend préférentiellement des duses 34 (ou conduits) reliant le logement interne 32 et l'extérieur du taillant 3. Depuis le logement interne 32, le fluide peut être éjecté vers l'extérieur du taillant 3 par les duses 34. Celles-ci débouchent au niveau de la face inférieure 3a du taillant 3 et/ou au niveau des parois latérales 3c du taillant 3, à proximité de la face inférieure 3a.

La pointe de mesure 10 comprend préférentiellement une tête 101 portant la face inférieure 10a de ladite pointe 10 et un corps 102 reliant la tête 101 et la tige centrale 1, comme cela est apparent sur les figures 1a, 1b, 1c. Ledit corps 102 de la pointe de mesure 10 présente préférentiellement au moins une portion conique, alors que la partie du logement interne 32 dans laquelle le corps 102 est accueilli présente une forme parallélépipédique. Une telle configuration est avantageuse en ce que, lorsque la pointe 10 se déplace de sa position rétractée vers une position sortie, ou d'une position sortie jusqu'à sa position rétractée, le fluide présent dans le logement interne 32 va également être éjecté sur le pourtour de la tête 101 de la pointe 10 : cela favorise le nettoyage de la pointe 10 et évite que des poussières ou gravas se coincent dans le logement interne 32, entre la pointe 10 et le taillant 3.

Il est envisageable de prévoir une tête 101 amovible, par exemple fixée sur le corps 102 par vissage. Cela permet l'interchangeabilité entre plusieurs types de têtes 101, par exemple présentant des formes en bout différentes (angles a) ou des types différents d'éléments d'attaque 12.

Toujours pour opérer en mode forage, le pénétromètre comprend avantageusement un outil rotatif 5, hors du sol, apte à provoquer la rotation du tube creux 2 et à lui appliquer une force d'appui. L'outil rotatif 5, motorisé, est fixé soit directement au tube creux 2, soit à la cellule de mesure 4 solidaire du tube creux 2 qui sera décrite plus tard.

La rotation et la force d'appui appliquées au tube creux 2 par l'outil rotatif 5 est transmise au taillant 3 et permet la mise en oeuvre du mode forage.

Le corps 102 de la pointe de mesure 10 est cannelé ou claveté, par exemple au niveau d'une zone 36, visible sur les figures 1b et 1c, pour interdire toute rotation de ladite pointe 10 dans le logement interne 32 du taillant 3. La rotation appliquée au tube creux 2 et au taillant 3 est ainsi également appliquée à la pointe de mesure 10 et à la tige centrale 1.

En mode forage, la pointe de mesure 10 est fermement maintenue contre le taillant 3 en position rétractée (par exemple, contre l'épaulement 35) et entraînée en rotation avec le taillant 3, ce qui confère à l'ensemble une bonne tenue mécanique avec une excellente capacité d'attaque du sol.

Revenant à la description de la pointe de mesure 10 et à la possibilité de mesure en mode statique, le pénétromètre 100 comprend préférentiellement une cellule de mesure 4 disposée au niveau de la deuxième extrémité 2b, hors du sol, du tube creux 2. Notons que dans l'exemple illustré sur la figure 1a, le système d'injection du fluide est connecté au tube creux 2 par l'intermédiaire de la cellule de mesure 4.

La cellule de mesure 4 comporte un vérin 41 dont un corps externe 411 est solidaire de la deuxième extrémité 2b du tube creux 2. Le corps externe 411 peut par exemple être fixé au tube creux 2 par deux mâchoires maintenues par un système à cliquet. Un tel système est avantageux en ce qu'il est facilement retirable du train de tiges.

Le vérin 41 comprend également un piston mobile 412 en contact avec la deuxième extrémité 1b de la tige centrale 1. L'actionnement du piston mobile 412 permet de déplacer la pointe de mesure 10 dans la pluralité de positions sorties. Typiquement, le piston mobile 412 peut provoquer un déplacement de la pointe 10 compris entre 1 cm et 7 cm. Les mesures en mode statique sont habituellement normalisées pour une vitesse d'enfoncement de 2cm/s : le piston 412 du vérin 41 est donc asservi en déplacement, pression appliquée et vitesse pour contrôler une telle vitesse d'enfoncement de la pointe 10, en mode mesure.

Le vérin 41 peut être hydraulique, pneumatique ou électrique, à tige lisse ou vis.

La cellule de mesure 4 comprend également un dispositif de mesure de contrainte 42. Ce dispositif 42 peut par exemple être un capteur de pression hydraulique apte à mesurer la force de réaction exercée par la deuxième extrémité 1b de la tige centrale 1 (du fait de la résistance à la pénétration du sol), lors du déplacement de la pointe de mesure 10 dans la pluralité de positions sorties. Alternativement, le dispositif de mesure de contrainte 42 pourra être un dispositif à base de ressort et capteur de pression ou encore un capteur électronique.

La cellule de mesure 4 peut en outre comprendre une interface électronique apte à enregistrer et analyser les différentes mesures issues du dispositif de mesure 42.

De manière avantageuse, le pénétromètre 100 comprend un dispositif de rappel 7 pour ramener la pointe de mesure 10 dans sa position rétractée, en l'absence d'actionnement du piston mobile 412 du vérin 41 de la cellule de mesure 4 (figures 1a, 1b, 1c). Par exemple, ce dispositif de rappel 7 peut consister en un ressort disposé autour d'une extension 102' du corps 102 de la pointe 10, au-dessus de la partie cannelée ou clavetée (zone 36). Le ressort prend appui, en partie inférieure, sur un épaulement du logement interne 32 du taillant 3, et en partie supérieure, sur une noix de tenue solidaire de l'extension 102' du corps 102. Ainsi, lorsqu'aucune poussée n'est exercée par le piston 412 du vérin 41 sur la tige 1, le ressort ramène la pointe 10 dans le logement interne 32 du taillant 3, en position rétractée.

Notons que la résistance du dispositif de rappel 7 doit être prise en compte lors des mesures de résistance du sol : elle doit être soustraite à la résistance mesurée par le dispositif de mesure de contrainte 42.

Le pénétromètre 100 selon l'invention peut avantageusement bénéficier d'un massif de réaction (non représenté), pour le maintenir stable au sol lors du forage ou de la mesure par enfoncement de la pointe 10. Pour une pointe de mesure de 7cm², un massif de réaction de l'ordre de 700 kg équivaut à environ 100 bars de poussée (pour l'enfoncement de la pointe 10). Accrocher le pénétromètre à un camion ou à un autre équipement disponible sur le lieu de mesure donne donc accès à un massif de réaction de 2 à 3 tonnes : cela est suffisant car une capacité de poussée de 200 à 400 bars permet de dimensionner toutes les fondations.

Alternativement ou en complément, il est envisageable de fixer le pénétromètre 100 au sol au moyen de tarières vissées dans le sol. Ces tarières présentent avantageusement un diamètre supérieur à celui du tube creux 2 et peuvent être enfoncées à différentes profondeurs selon le massif de réaction requis.

Enfin, pour faciliter l'extraction du taillant 3 et de la pointe de mesure 10 du fond du trou généré dans le sol, il peut être avantageux que le taillant 3 soit muni de troisièmes éléments d'attaque 33 sur sa face supérieure 3b, opposée à la face inférieure 3a (figure 1a). En cas d'effondrement du sol lors du forage, le relevage hors du trou du taillant 3, de la pointe 10 (en position rétractée) et du train de tube 2 / tige 1 peut être facilitée par la mise en rotation de l'ensemble et l'attaque des résidus de sol effondré par les troisièmes éléments 33.

## Revendications

1. Pénétromètre (100) pour la mesure en mode statique de la résistance à la pénétration d'un sol comprenant :
- au moins une tige centrale (1) terminée à une première extrémité (1a) par une pointe de mesure (10),
- au moins un tube creux (2) entourant la tige centrale (1), cette dernière étant apte à coulisser à l'intérieur du tube creux (2),
- un taillant (3) solidaire d'une première extrémité (2a) du tube creux (2), et dont une face inférieure (3a) destinée à forer le sol est munie de premiers éléments d'attaque (31), le taillant (3) accueillant la pointe de mesure (10) dans un logement interne (32), la pointe de mesure (10) étant mobile dans le logement interne (32) en translation selon un axe d'enfoncement, entre une position rétractée et une pluralité de positions sorties,
le pénétromètre (100) étant **caractérisé en ce que** la pointe de mesure (10) est munie de deuxièmes éléments d'attaque (12) sur une face inférieure destinée à s'enfoncer dans le sol, de sorte que, dans la position rétractée de la pointe de mesure (10), les premiers (31) et deuxièmes (12) éléments d'attaque définissent une surface d'attaque (Sₐ) continue.

2. Pénétromètre (100) selon la revendication précédente, dans lequel le taillant (3) comprend des duses (34) reliant le logement interne (32) et l'extérieur du taillant (3), pour éjecter un fluide, ledit fluide étant acheminé jusqu'au logement interne (32) via le tube creux (2) ou la tige centrale (1).

3. Pénétromètre (100) selon l'une des revendications précédentes, dans lequel les premiers (31) et/ou les deuxièmes (12) éléments d'attaque se présentent sous forme de boutons, d'ogives, de pastilles ou de barrettes.

4. Pénétromètre (100) selon l'une des revendications précédentes, dans lequel le logement interne (32) du taillant (3) comprend un épaulement (35) contre lequel la pointe de mesure (10) est bloquée lorsqu'elle est en position rétractée.

5. Pénétromètre (100) selon l'une des revendications précédentes, comprenant une cellule de mesure (4) comportant :
- un vérin (41) dont un corps externe (411) est solidaire d'une deuxième extrémité (2b) du tube creux (2) et dont un piston mobile (412) est en contact avec une deuxième extrémité (1b) de la tige centrale (1), l'actionnement du piston mobile (412) permettant de déplacer la pointe de mesure (10) dans la pluralité de positions sorties,
- un dispositif de mesure de contrainte (42) pour mesurer la résistance du sol lors du déplacement de la pointe de mesure (10) dans la pluralité de positions sorties.

6. Pénétromètre (100) selon la revendication précédente, comprenant un dispositif de rappel (7) pour ramener la pointe de mesure (10) dans une position rétractée en l'absence d'actionnement du piston mobile (412) du vérin (41) .

7. Pénétromètre (100) selon l'une des deux revendications précédentes, comprenant un outil rotatif (5), hors du sol, apte à provoquer la rotation du tube creux (2), l'outil rotatif (5) étant fixé soit à la cellule de mesure (4), soit directement au tube creux (2).

8. Pénétromètre (100) selon la revendication 2, comprenant un système d'injection (6) du fluide connecté à une deuxième extrémité (2b) du tube creux (2), pour injecter le fluide dans le tube creux (2).

9. Pénétromètre (100) selon la revendication précédente, dans lequel la tige centrale (1) est pleine et présente une aile hélicoïdale (13) sur sa surface externe, pour favoriser son centrage dans le tube creux (2) et guider l'écoulement du fluide dans le tube creux (2), jusqu'au taillant (3).

10. Pénétromètre (100) selon la revendication 2, comprenant un système d'injection (6) du fluide connecté à une deuxième extrémité (1b) de la tige centrale (1), pour injecter le fluide dans ladite tige centrale (1), laquelle tige (1) est creuse.

11. Pénétromètre (100) selon l'une des revendications précédentes, dans lequel la pointe de mesure (10) comprend une tête (101) portant la face inférieure (10a) de ladite pointe (10) et un corps (102) reliant la tête (101) et la tige centrale (1), ledit corps (102) présentant au moins une portion conique.

12. Pénétromètre (100) selon la revendication précédente, dans lequel le corps (102) de la pointe de mesure (10) est cannelé ou claveté pour interdire toute rotation de ladite pointe (10) dans le logement interne (32) du taillant (3).

## Patentansprüche

1. Penetrometer (100) zum Messen des Eindringwiderstandes eines Bodens in einem statischen Modus, umfassend:
- mindestens eine zentrale Stange (1), die an einem ersten Ende (1a) mit einer Messspitze (10) endet,
- mindestens ein hohles Rohr (2), das die zentrale Stange (1) umgibt, wobei diese letztgenannte geeignet ist, um im Inneren des hohlen Rohrs (2) zu gleiten,
- eine Schneidkante (3), die mit einem ersten Ende (2a) des hohlen Rohrs (2) fest verbunden ist und deren eine untere Fläche (3a), die dafür bestimmt ist, in den Boden zu bohren, mit ersten Eingriffselementen (31) versehen ist, wobei die Schneidkante (3) die Messspitze (10) in einem inneren Gehäuse (32) aufnimmt, die Messspitze (10) in dem inneren Gehäuse (32) entlang einer Einstoßachse zwischen einer eingezogenen Position und einer Vielzahl von Ausgangspositionen verschiebbar ist,
wobei das Penetrometer (100) **dadurch gekennzeichnet ist, dass** die Messspitze (10) mit zweiten Eingriffselementen (12) auf einer unteren Fläche versehen ist, die dafür bestimmt ist, in den Boden einzustoßen, sodass in der eingezogenen Position der Messspitze (10) die ersten (31) und die zweiten Eingriffselemente (12) eine fortlaufende Eingriffsoberfläche (Sₐ) definieren.

2. Penetrometer (100) nach dem vorstehenden Anspruch, wobei die Schneidkante (3) Düsen (34) umfasst, die das innere Gehäuse (32) und die Außenseite der Schneidekante (3) verbinden, um ein Fluid auszustoßen, wobei das Fluid zu dem inneren Gehäuse (32) über das hohle Rohr (2) oder die zentrale Stange (1) befördert wird.

3. Penetrometer (100) nach einem der vorstehenden Ansprüche, wobei die ersten (31) und/oder die zweiten Eingriffselemente (12) in Form von Knöpfen, Spitzkegeln, Plättchen oder Stegen vorliegen.

4. Penetrometer (100) nach einem der vorstehenden Ansprüche, wobei das innere Gehäuse (32) der Schneidkante (3) einen Anschlag (35) umfasst, gegen den die Messspitze (10) blockiert wird, wenn sie in der eingezogenen Position ist.

5. Penetrometer (100) nach einem der vorstehenden Ansprüche, umfassend eine Messzelle (4), die aufweist:
- einen Zylinder (41), von dem ein äußerer Körper (411) mit einem zweiten Ende (2b) des hohlen Rohrs (2) fest verbunden ist und von dem ein bewegbarer Kolben (412) in Berührung mit einem zweiten Ende (1b) der zentralen Stange (1) ist, wobei das Betätigen des bewegbaren Kolbens (412) die Umsetzung der Messspitze (10) in der Vielzahl von Ausgangspositionen ermöglicht,
- eine Dehnungsmessvorrichtung (42) zum Messen des Widerstands des Bodens während der Umsetzung der Messspitze (10) in der Vielzahl von Ausgangspositionen.

6. Penetrometer (100) nach dem vorstehenden Anspruch, umfassend eine Rückstellvorrichtung (7) zum Zurückbringen der Messspitze (10) in eine eingezogene Position in Abwesenheit einer Betätigung des bewegbaren Kolbens (412) des Zylinders (41).

7. Penetrometer (100) nach einem der zwei vorstehenden Ansprüche, umfassend ein Drehwerkzeug (5) außerhalb des Bodens, das geeignet ist, um die Drehung des hohlen Rohrs (2) zu bewirken, wobei das Drehwerkzeug (5) entweder an der Messzelle (4) oder direkt an dem hohlen Rohr (2) befestigt ist.

8. Penetrometer (100) nach Anspruch 2, umfassend ein System (6) zum Einspritzen des Fluids, das mit einem zweiten Ende (2b) des hohlen Rohrs (2) verbunden ist, um das Fluid in das hohle Rohr (2) einzuspritzen.

9. Penetrometer (100) nach dem vorstehenden Anspruch, wobei die zentrale Stange (1) gefüllt ist und einen schraubenförmigen Flügel (13) auf ihrer äußeren Fläche vorweist, um ihre Zentrierung in dem hohlen Rohr (2) zu fördern und den Durchfluss des Fluids in dem hohlen Rohr (2) zu der Schneidkante (3) zu führen.

10. Penetrometer (100) nach Anspruch 2, umfassend ein System (6) zum Einspritzen des Fluids, das mit einem zweiten Ende (1b) der zentralen Stange (1) verbunden ist, um das Fluid in die zentrale Stange (1) einzuspritzen, wobei die Stange (1) hohl ist.

11. Penetrometer (100) nach einem der vorstehenden Ansprüche, wobei die Messspitze (10) einen Kopf (101), der die untere Fläche (10a) der Spitze (10) trägt, und einen Körper (102) umfasst, der den Kopf (101) und die zentrale Stange (1) verbindet, wobei der Körper (102) mindestens einen konischen Abschnitt vorweist.

12. Penetrometer (100) nach dem vorstehenden Anspruch, wobei der Körper (102) der Messspitze (10) kanneliert oder verkeilt ist, um jegliche Drehung der Spitze (10) in dem inneren Gehäuse (32) der Schneidkante (3) zu sperren.

## Claims

1. Penetrometer (100) for measuring the penetration resistance of a ground in static mode, comprising:
- at least one central rod (1) which, at a first end (1a), terminates in a measurement tip (10),
- at least one hollow tube (2) which surrounds the central rod (1), said rod being capable of sliding inside the hollow tube (2),
- a drill bit (3) which is secured to a first end (2a) of the hollow tube (2), and of which a lower face (3a) intended to drill the ground is provided with first driving elements (31), the drill bit (3) receiving the measurement tip (10) in an internal recess (32), the measurement tip (10) being movable in the internal recess (32) in translation along a penetration axis between a retracted position and a plurality of output positions,
the penetrometer (100) being **characterized in that** the measurement tip (10) is provided with second driving elements (12) on a lower face intended to penetrate into the ground, such that, in the retracted position of the measurement tip (10), the first driving elements (31) and second driving elements (12) define a continuous driving surface (Sₐ).

2. Penetrometer (100) according to the preceding claim, wherein the drill bit (3) comprises nozzles (34) that connect the internal recess (32) and the exterior of the drill bit (3), for ejecting a fluid, said fluid being conveyed to the internal recess (32) via the hollow tube (2) or the central rod (1).

3. Penetrometer (100) according to either of the preceding claims, wherein the first driving elements (31) and/or second driving elements (12) are in the form of buttons, ribs, pads or bars.

4. Penetrometer (100) according to any of the preceding claims, wherein the internal recess (32) of the drill bit (3) comprises a shoulder (35) against which the measurement tip (10) is blocked when it is in the retracted position.

5. Penetrometer (100) according to any of the preceding claims, comprising a measurement cell (4) comprising:
- a cylinder (41), an outer body (411) of which is secured to a second end (2b) of the hollow tube (2) and a movable piston (412) of which is in contact with a second end (1b) of the central rod (1), the actuation of the movable piston (412) making it possible to move the measurement tip (10) into the plurality of output positions,
- a stress measuring device (42) for measuring the resistance of the ground during the movement of the measurement tip (10) into the plurality of output positions.

6. Penetrometer (100) according to the preceding claim, comprising a return device (7) for returning the measurement tip (10) into a retracted position in the absence of actuation of the movable piston (412) of the cylinder (41).

7. Penetrometer (100) according to one of the two preceding claims, comprising a rotary tool (5), outside the ground, which is able to rotate the hollow tube (2), the rotary tool (5) being fixed either to the measurement cell (4) or directly to the hollow tube (2).

8. Penetrometer (100) according to claim 2, comprising an injection system (6) for the fluid that is connected to a second end (2b) of the hollow tube (2), for injecting the fluid into the hollow tube (2).

9. Penetrometer (100) according to the preceding claim, wherein the central rod (1) is solid and has a helical wing (13) on its outer surface, to promote its centring in the hollow tube (2) and guide the flow of the fluid in the hollow tube (2), as far as the drill bit (3).

10. Penetrometer (100) according to claim 2, comprising an injection system (6) for the fluid that is connected to a second end (1b) of the central rod (1), for injecting the fluid into said central rod (1), which rod (1) is hollow.

11. Penetrometer (100) according to any of the preceding claims, wherein the measurement tip (10) comprises a head (101) bearing the lower face (10a) of said tip (10) and a body (102) connecting the head (101) and the central rod (1), said body (102) having at least one conical portion.

12. Penetrometer (100) according to the preceding claim, wherein the body (102) of the measurement tip (10) is fluted or keyed to prevent any rotation of said tip (10) in the internal recess (32) of the drill bit (3).
